# EUROPEAN PATENT APPLICATION

(11) **EP 4 622 184 A1**
(43) Date of publication of application: **24.09.2025**
(21) Application number: 23891343.8
(22) Date of filing: 30.10.2023
(51) Int. Cl.: H04L 12/28, H04L 1/08, H04L 45/00

(54) **COMMUNICATION DEVICE, COMMUNICATION METHOD, AND PROGRAM**

(30) Priority: 14.11.2022 JP 2022181856
(71) Applicant: Sony Semiconductor Solutions Corporation, Atsugi-shi, Kanagawa 243-0014 (JP)
(72) Inventor: HIRAMA Takayuki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/039086
(87) International publication number: WO 2024/106190

(57) **Abstract**

The present disclosure relates to a communication device, a communication method, and a program allowing an improvement in noise resistance performance.

A packet duplication unit duplicates, as an original packet, a packet generated with a packet structure incorporating a mobile industry processor interface (MIPI) standard into a frame defined by a communication standard over a network to create a predetermined number of duplicate packets, and a transmission unit transmits the predetermined number of duplicate packets via the network. The present technology can be applied to, for example, a communication system connected with an in-vehicle camera.

## Description

### TECHNICAL FIELD

The present disclosure relates to a communication device, a communication method, and a program, and particularly to a communication device, a communication method, and a program allowing an improvement in noise resistance performance.

### BACKGROUND ART

A protocol compliant with International Organization for Standardization (ISO) 26262, which is a functional safety standard, is under development toward Level 4 (highly automated driving) and Level 5 (full driving automation), which are next-generation automated driving levels. Then, in the Camera Working Group of the Mobile Industry Processor Interface (MIPI) Alliance, the standardization of the Camera Service Extensions (CSE) standard that incorporates functional safety and security capabilities required for applications such as automated driving is underway.

Therefore, functional safety from a complementary metal oxide semiconductor (CMOS) image sensor (CIS) to advanced driver-assistance systems (ADAS) or an electronic control unit (ECU) is achieved by the MIPI standard group.

Patent Document 1 proposes a wireless local area network (LAN) communication device that duplicates a redundant MAC protocol data unit (MPDU) generated from transmission data subject to redundancy to a duplicate MPDU and generates an aggregate MAC protocol data unit (A-MPDU) including the redundant MPDU and the duplicate MPDU.

### CITATION LIST

### PATENT DOCUMENT

Patent Document 1: WO 2020/100734 A

### SUMMARY OF THE INVENTION

### PROBLEMS TO BE SOLVED BY THE INVENTION

By the way, the CSE standard incorporating functional safety and security capabilities as described above makes addressing functional safety feasible from a protocol perspective, but there is a concern about low noise resistance on the Ethernet path. Furthermore, in a case where it is not possible to address a situation under more adverse conditions, there is a possibility that packets that are safe on the MIPI path are corrupted on the Ethernet path.

The present disclosure has been made in view of such circumstances, and it is therefore an object of the present disclosure to improve noise resistance performance.

### SOLUTIONS TO PROBLEMS

A communication device according to one aspect of the present disclosure includes: a packet duplication unit that duplicates, as an original packet, a packet generated with a packet structure incorporating a MIPI standard into a frame defined by a communication standard over a network to create a predetermined number of duplicate packets; and a transmission unit that transmits the predetermined number of duplicate packets via the network.

A communication method or program according to one aspect of the present disclosure includes: duplicating, as an original packet, a packet generated with a packet structure incorporating a MIPI standard into a frame defined by a communication standard over a network to create a predetermined number of duplicate packets; and transmitting the predetermined number of duplicate packets via the network.

According to one aspect of the present disclosure, a packet generated with a packet structure incorporating a MIPI standard into a frame defined by a communication standard over a network is duplicated as an original packet to create a predetermined number of duplicate packets, and the predetermined number of duplicate packets are transmitted via the network.

### BRIEF DESCRIPTION OF DRAWINGS

Fig. 1 is a block diagram illustrating a configuration example of an embodiment of a communication system to which the present technology is applied.
Fig. 2 is a diagram illustrating an example of a packet structure of a 1722 packet.
Fig. 3 is a diagram for describing a description set in the 1722 packet.
Fig. 4 is a block diagram illustrating a configuration example of an ECU.
Fig. 5 is a diagram for describing an example of processing of duplicating the 1722 packet when an error occurs during relay.
Fig. 6 is a diagram for describing an example of processing of controlling whether or not to duplicate the 1722 packet on the basis of a VLAN.
Fig. 7 is a diagram for describing an example of processing of controlling whether or not to duplicate the 1722 packet on the basis of a VLAN in a case where IEEE 802.1CB is applied.
Fig. 8 is a flowchart for describing packet duplication processing.
Fig. 9 is a flowchart for describing duplicate packet management processing.
Fig. 10 is a flowchart for describing packet transfer processing.
Fig. 11 is a block diagram illustrating a configuration example of a communication system applied to a vehicle.
Fig. 12 is a block diagram illustrating a configuration example of an embodiment of a computer to which the present technology is applied.

### MODE FOR CARRYING OUT THE INVENTION

Hereinafter, specific embodiments to which the present technology is applied will be described in detail with reference to the drawings.

### <Configuration example of communication system>

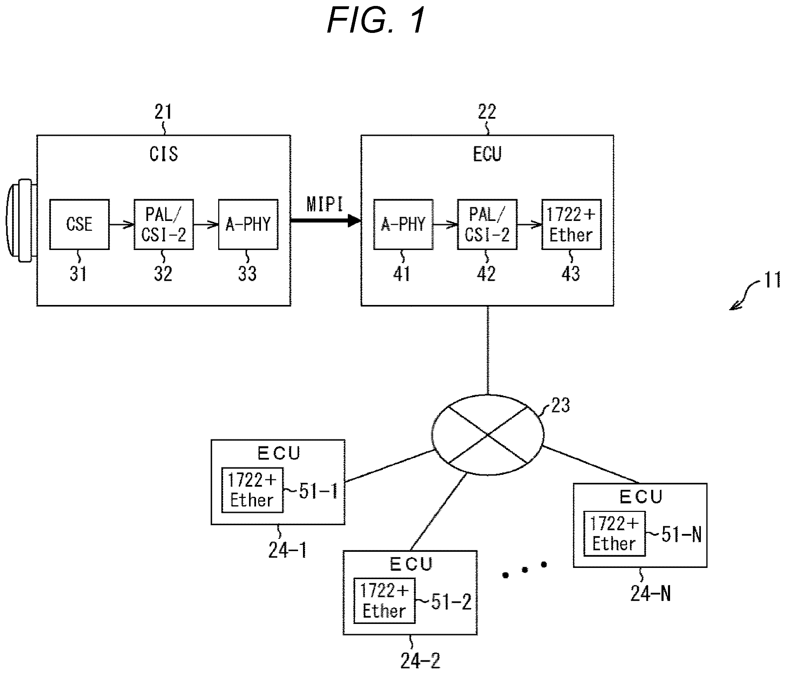

Fig. 1 is a block diagram illustrating a configuration example of an embodiment of a communication system to which the present technology is applied.

As illustrated in Fig. 1, a communication system 11 includes an ECU 22 connected to a CIS 21 and N ECUs 24-1 to 24-N, the ECU 22 being connected to the ECUs 24-1 to 24-N via a network 23. Note that the ECUs 24-1 to 24-N have similar configurations, and will be simply referred to as an ECU 24 unless otherwise distinguished.

For example, the communication system 11 is configured to transmit image data acquired by the CIS 21 to the ECU 22 in conformity with the MIPI standard and transmit the image data from the ECU 22 to the ECU 24 via the network 23. The network 23 is constructed on the basis of a standard such as the fifth generation mobile communication system, Wi-Fi, or Ethernet including a local area network (LAN). Then, the ECU 22 and the ECU 24 can communicate over Ethernet conforming to Institute of Electrical and Electronics Engineers (IEEE) 1722, which is a communication standard that defines the packet format for video and audio data.

The CIS 21 includes a CSE processing unit 31, a transmitter circuit 32, and a physical layer interface 33.

The CSE processing unit 31 stores image data output from an image sensor (not illustrated) included in the CIS 21 in the payload of a packet structure conforming to the CSE standard and supplies the image data to the transmitter circuit 32.

The transmitter circuit 32 performs transmission processing on the image data supplied from the CSE 31 in conformity with the protocol adaptation layer (PAL)/CSI-2 standard to store the image data in the payload of a packet structure conforming to the PAL/CSI-2 standard, for example, and supply the image data to the physical layer interface 33.

The physical layer interface 33 is an interface conforming to the A-PHY standard of the MIPI, and can transmit the image data supplied from the transmitter circuit 32 to the ECU 22 in a state where functional safety is ensured by the MIPI.

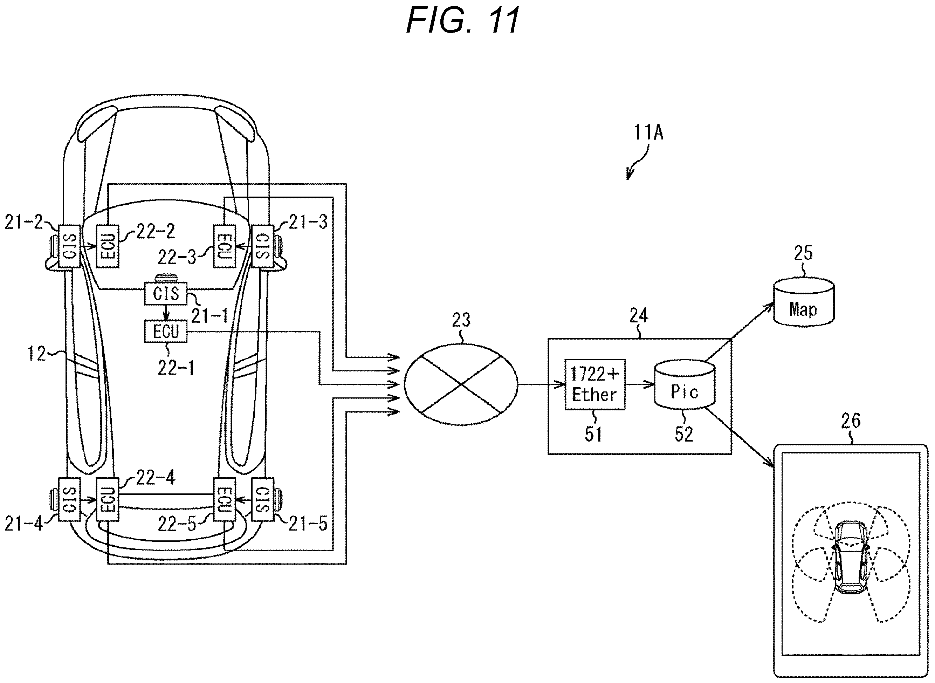

The ECU 22 includes a physical layer interface 41, a receiver circuit 42, and a network communication processing unit 43. For example, in a case where the CIS 21 and the ECU 22 are installed on a vehicle 12, as described later with reference to Fig. 11, the ECU 22 can be implemented as a part of the ADAS functionality that assists in driving of the vehicle 12.

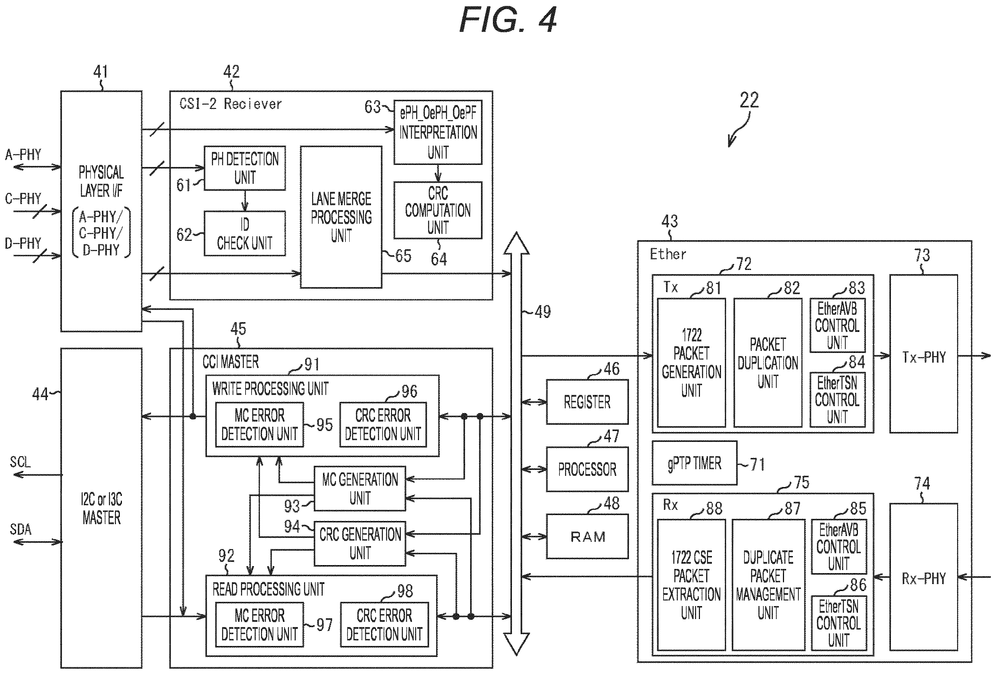

Similarly to the physical layer interface 33, the physical layer interface 41 is an interface conforming to the A-PHY standard of the MIPI, receives the image data transmitted by the physical layer interface 33, and supplies the image data to the receiver circuit 42. Note that, as illustrated in Fig. 4 to be described later, the physical layer interface 41 can be switched to any one of A-PHY, C-PHY, or D-PHY, and the same applies to the physical layer interface 33.

The receiver circuit 42 performs reception processing based on the packet structure of the image data received by the physical layer interface 41 in conformity with the PAL/CSI-2 standard, and then supplies the image data to the network communication processing unit 43.

The network communication processing unit 43 performs communication processing for Ethernet communication conforming to IEEE 1722, and transmits the image data supplied from the receiver circuit 42 via the network 23. At this time, for example, the network communication processing unit 43 can generate a packet (hereinafter also referred to as a 1722 packet) having a packet structure incorporating the MIPI standard (PAL/CSI-2 & CSE) into the Ethernet frame defined by IEEE 1722, store the image data in the payload of the 1722 packet, and transmit the image data. Furthermore, as will be described later with reference to Fig. 4, the network communication processing unit 43 has the capability to duplicate the 1722 packet, and transmit, receive, and transfer the duplicate 1722 packet.

The ECU 24 is configured similarly to the ECU 22, and includes at least a network communication processing unit 51.

Similarly to the network communication processing unit 43, the network communication processing unit 51 performs communication processing for Ethernet communication conforming to IEEE 1722, and acquires the image data transmitted via the 1722 packet over the network 23. Similarly to the network communication processing unit 43, the network communication processing unit 51 has a capability to duplicate the 1722 packet, and transmit, receive, and transfer the duplicate 1722 packet.

The communication system 11 configured as described above can ensure functional safety from the CIS 21 to the ECU 22 by using, for example, the CSI-2 packet compliant with ISO 26262. Then, the communication system 11 can ensure functional safety by using the 1722 packet in communication via the network 23 in a similar manner to the CSI-2 packet compliant with ISO 26262. That is, the communication system 11 can extend the functional safety ensured by the MIPI standard from the CIS 21 to the ECU 22 to the network 23 provided ahead of the ECU 22, and thus can achieve more reliable functional safety.

Therefore, the communication system 11 can construct a network that consistently ensures functional safety from a vehicle having an automated driving function via the network 23, for example. It is therefore possible for a user device or the like equipped with the capabilities of the ECU 24 to perform remote operation of the vehicle while satisfying functional safety. Furthermore, the network communication processing unit 43 can manage the bandwidth of the network 23 based on AVB/TSN, preventing important image data from being lost due to the bandwidth.

Moreover, for example, even in an environment where noise on the network 23 makes it difficult to receive the 1722 packet correctly, the communication system 11 can receive the 1722 packet successfully by duplicating the 1722 packet and transmitting, receiving, and transferring the duplicate 1722 packet. As a result, the communication system 11 can improve noise resistance performance. Furthermore, the communication system 11 can further improve noise resistance performance by temporally distributing the transmission timing along the path of the network 23 for particularly important 1722 packets, for example.

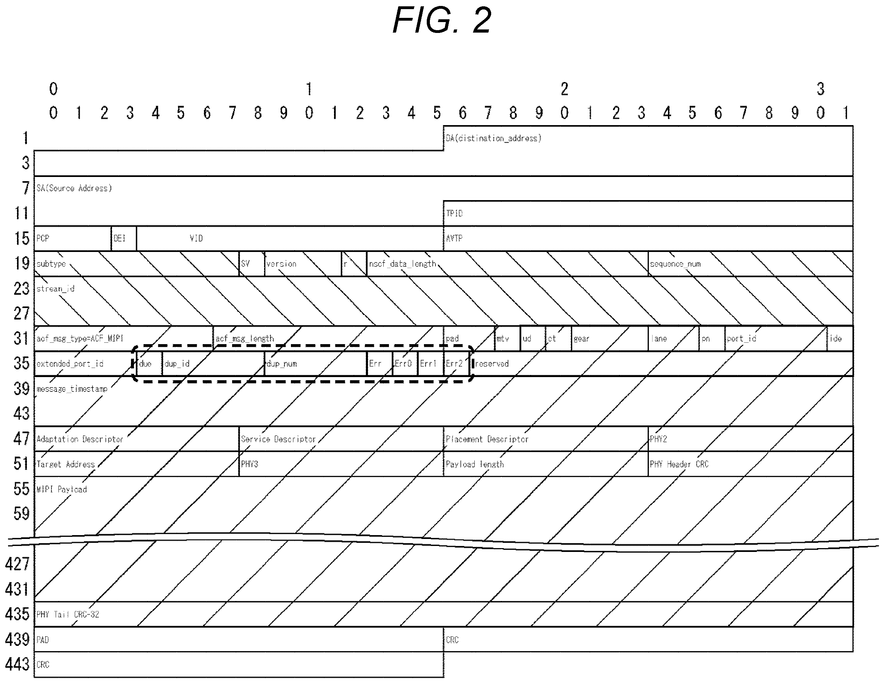

Fig. 2 illustrates an example of the packet structure of the 1722 packet.

In the packet structure illustrated in Fig. 2, due, dup_id, dup_num, Err, Err0, Err1, and Err2 enclosed by a bold dashed line are stored in the packet header of the 1722 packet so as to be added to the IEEE 1722 format as information necessary for managing the 1722 packet duplication.

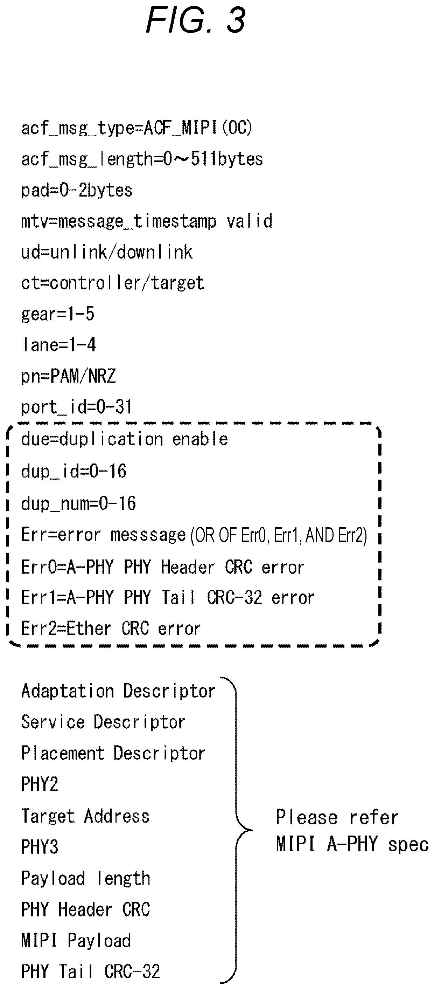

For example, as illustrated in Fig. 3, due indicates whether or not the 1722 packet duplication is enabled, dup_id is an identification number that ranges from 0 to 16 and is used to identify each of the same duplicate 1722 packets, and dup_num is a value that ranges from 0 to 16 and indicates the number of duplicates 1722 packets. Err is an error history indicating that an error has occurred in any of Err0, Err1, or Err2. Err0 is an error history indicating that a CRC error has occurred in A-PHY PHY Header, Err1 is an error history indicating that a CRC-32 error has occurred in A-PHY PHY Tail, and Err2 is an error history indicating that an Ether CRC error has occurred.

Note that, as illustrated in Fig. 2, the 1722 packet contains Adaptation Descriptor, Service Descriptor, Placement Descriptor, PHY2, Target Address, PHY3, Payload length, PHY Header CRC, MIPI payload, and PHY Tail CRC-32 according to the A-PHY specification.

### <Configuration example of ECU>

Fig. 4 is a block diagram illustrating a configuration example of the ECU 22.

As illustrated in Fig. 4, the ECU 22 includes an I2C or I3C master 44, a camera controller interface (CCI) master 45, a register 46, a processor 47, and a random access memory (RAM) 48 in addition to the physical layer interface 41, the receiver circuit 42, and the network communication processing unit 43. Furthermore, the receiver circuit 42, the network communication processing unit 43, the CCI master 45, the register 46, the processor 47, and the RAM 48 are interconnected via a bus 49.

The physical layer interface 41 can be switched to any of A-PHY, C-PHY, or D-PHY, and communicates with the physical layer interface 33 belonging to the CIS 21 in conformity to the corresponding standard.

The receiver circuit 42 includes a packet header detection unit 61, an ID check unit 62, an interpretation unit 63, a CRC computation unit 64, and a lane merge processing unit 65.

The packet header detection unit 61 detects a packet header from a packet supplied via the physical layer interface 41, performs processing according to various types of setting information stored in the packet header, and supplies the packet header to the ID check unit 62.

The ID check unit 62 checks the packet ID included in the packet header supplied from the packet header detection unit 61 and manages the packet ID.

The interpretation unit 63 interprets the setting information stored in the extended payload header ePH, the optional extended payload header OePH, and the optional extended payload footer OePF included in the packet supplied via the physical layer interface 41, and performs processing according to each setting information.

The CRC computation unit 64 computes the CRC of the packet supplied via the interpretation unit 63, and outputs a CRC error detection signal in a case where a CRC error is detected.

The lane merge processing unit 65 merges a packet divided into four lanes and supplied from the physical layer interface 41, and outputs the packet on a single lane. Then, the packet output from the lane merge processing unit 65 is supplied to the network communication processing unit 43 via the bus 49.

The network communication processing unit 43 includes a gPTP timer 71, a transmitting processing unit 72, a transmitting physical layer 73, a receiving physical layer 74, and a receiving processing unit 75.

The gPTP timer 71 generates a timestamp to be added to the 1722 packet in conformity with the generic precision time protocol (gPTP), which is a communication protocol used to synchronize clocks across the entire communication system 11.

The transmitting processing unit 72 performs processing related to the 1722 packet transmission. The transmitting processing unit 72 includes a 1722 packet generation unit 81, a packet duplication unit 82, an EtherAVB control unit 83, and an EtherTSN control unit 84.

That is, the 1722 packet generation unit 81 generates a 1722 packet having a packet structure incorporating the MIPI standard into the frame defined by IEEE 1722 on the basis of the packet (A-packet) that is supplied from the receiver circuit 42 via the bus 49 and conforms to the A-PHY standard. At this time, the 1722 packet generation unit 81 sets the timestamp generated by the gPTP timer 71 to message_timestamp (see Fig. 2), for example.

In a case where the 1722 packet duplication is enabled (due = 1), the packet duplication unit 82 performs packet duplication processing of duplicating, as an original packet, the 1722 packet generated by the 1722 packet generation unit 81 in accordance with the number of duplicate 1722 packets (dup_num). Here, the same 1722 packets duplicated by the packet duplication unit 82 are hereinafter referred to as duplicate 1722 packets. Then, the packet duplication unit 82 sets an identification number (dup_id) used to identify each of a predetermined number (dup_num + 1) of duplicate 1722 packets to each duplicate 1722 packet as a sequential number on the basis of dup_num and supplies the same to the transmitting physical layer 73.

For example, in a case where due = 1 and dup_num = 5 are set, the packet duplication unit 82 duplicates the 1722 packet generated by the 1722 packet generation unit 81 five times, and sets dup_id: 0 to 5 to a total of six duplicate 1722 packets.

The EtherAVB control unit 83 and the EtherTSN control unit 84 perform various types of control required to reserve the bandwidth of the network 23 for the predetermined number of duplicate 1722 packets obtained from the duplication performed by the packet duplication unit 82. For example, in the packet structure of the 1722 packet illustrated in Fig. 2, ud, ct, gear, lane, pn, and port_id stored in the header are information used for bandwidth reservation based on AVB/TSN.

The transmitting physical layer 73 transmits the predetermined number of duplicate 1722 packets supplied from the packet duplication unit 82 to the network 23. At this time, the transmitting physical layer 73 can temporally distribute the transmission timing along the path of the network 23 for particularly important 1722 packets.

The receiving physical layer 74 receives the predetermined number of duplicate 1722 packets transmitted from the network 23 and supplies the duplicate 1722 packets to the receiving processing unit 75.

The receiving processing unit 75 performs processing related to the 1722 packet reception. The receiving processing unit 75 includes an EtherAVB control unit 85, an EtherTSN control unit 86, a duplicate packet management unit 87, and a 1722 CSE packet extraction unit 88.

The EtherAVB control unit 85 and the EtherTSN control unit 86 perform various types of control required to reserve the bandwidth of the network 23 for the predetermined number of duplicate 1722 packets received by the receiving processing unit 75.

In a case where the 1722 packet duplication is enabled (due = 1), the duplicate packet management unit 87 performs duplicate packet management processing of managing the reception of the predetermined number of duplicate 1722 packets supplied from the receiving physical layer 74. For example, when the predetermined number (dup_num + 1) of duplicate 1722 packets are transmitted, the duplicate packet management unit 87 acquires the first successfully received duplicate 1722 packet from among the duplicate 1722 packets, and supplies the duplicate 1722 packet to the 1722 CSE packet extraction unit 88.

In a case where the destination address of the duplicate 1722 packets supplied from the receiving physical layer 74 is different from the address of its own ECU 22, the duplicate packet management unit 87 performs packet transfer processing of transferring the duplicate 1722 packets in accordance with the destination address. At this time, the duplicate packet management unit 87 can update an error history on the basis of whether or not an error has occurred in the duplicate 1722 packets.

The 1722 CSE packet extraction unit 88 extracts a 1722 CSE packet from the packets supplied from the receiving physical layer 74 and outputs the 1722 CSE packet to the bus 49.

The I2C or I3C master 44 initiates and controls communication using a clock signal SCL and a data signal SDA with an I2C or I3C slave (not illustrated) belonging to the CIS 21 in conformity with the inter-integrated circuit (I2C) or improved inter integrated circuits (I3C) communication standard.

The CCI master 45 initiates and controls communication with a CCI slave (not illustrated) belonging to the CIS 21 in conformity with the CSI-2 standard. The CCI master 45 includes a write processing unit 91, a read processing unit 92, an MC generation unit 93, and a CRC generation unit 94. Furthermore, the write processing unit 91 has an MC error detection unit 95 and a CRC error detection unit 96, and the read processing unit 92 has an MC error detection unit 97 and a CRC error detection unit 98.

In the write processing unit 91, the MC error detection unit 95 outputs Slave Side MC err (M) in a case of detecting an MC error on the CCI slave side (NACK detection during MC_M transmission), and the CRC error detection unit 96 outputs Slave Side CRC err (M) in a case of detecting a CRC error on the CCI slave side (NACK detection during MC_CRC transmission). Here, the Slave Side MC err (M) is an MC error on the CCI slave side detected on the CCI master 45 side, and the Slave Side CRC err (M) is a CRC error on the CCI slave side detected on the CCI master 45 side.

In the read processing unit 92, the MC error detection unit 97 outputs Master Side MC err in a case of detecting an MC error (an error based on comparison between an MC generated by the CCI master 45 and an MC received by the CCI master 45) on the CCI master 45 side, and the CRC error detection unit 98 outputs Master Side CRC err in a case of detecting an MC error (an error based on comparison between a CRC generated by the CCI master 45 and a CRC received by the CCI master 45) on the CCI master 45 side.

The MC generation unit 93 generates an MC on the CCI master 45 side and supplies the MC to the write processing unit 91 and the read processing unit 92.

The CRC generation unit 94 generates a CRC on the CCI master 45 side and supplies the CRC to the write processing unit 91 and the read processing unit 92.

The register 46 stores various setting values and the like set for the ECU 22. The processor 47 executes a program for controlling each unit of the ECU 22 in accordance with the setting values stored in the register 46. The RAM 48 stores data required when the processor 47 executes the program.

Here, as described above, the ECU 24 in Fig. 1 includes at least the network communication processing unit 51 configured similarly to the network communication processing unit 43. Therefore, similarly to the ECU 22, the ECU 24 can perform packet duplication processing of duplicating the 1722 packet, duplicate packet management processing of managing the reception of the predetermined number of duplicate 1722 packets, and packet transfer processing of transferring the duplicate 1722 packets.

### <Processing example of packet transfer processing>

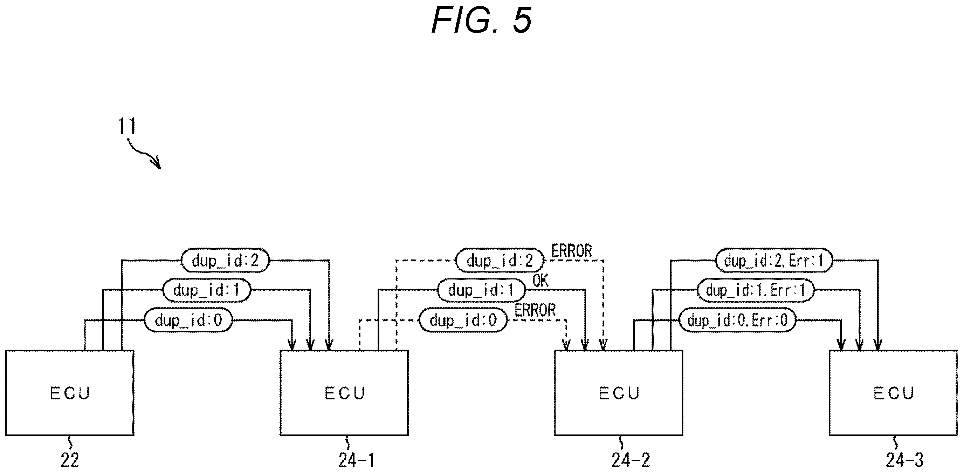

A processing example of the packet transfer processing of transferring the duplicate 1722 packets will be described with reference to Figs. 5 to 7.

Fig. 5 is a diagram for describing an example of processing of duplicating the 1722 packet when an error occurs during relay. Here, an example where three 1722 packets transmitted from the ECU 22 are relayed by the ECU 24-1 and the ECU 24-2 and transmitted to the destination ECU 24-3 will be described.

For example, in a case where dup_num = 2 is set, the ECU 22 duplicates the same 1722 packet twice and transmits a total of three duplicate 1722 packets to the ECU 24-1. At this time, the ECU 22 sets 0, 1, and 2 to each dup_id and transmits a duplicate 1722 packet (dup_id: 0), a duplicate 1722 packet (dup_id: 1), and a duplicate 1722 packet (dup_id: 2).

In the example illustrated in Fig. 5, the ECU 24-1 has successfully received the duplicate 1722 packet (dup_id: 0), the duplicate 1722 packet (dup_id: 1), and the duplicate 1722 packet (dup_id: 2) transmitted from the ECU 22 with no error. Therefore, the ECU 24-1 can transfer the duplicate 1722 packet (dup_id: 0), the duplicate 1722 packet (dup_id: 1), and the duplicate 1722 packet (dup_id: 2) to the ECU 24-2 as they are.

Then, in the example illustrated in Fig. 5, the ECU 24-2 has successfully received the duplicate 1722 packet (dup_id: 1) transmitted from the ECU 24-1 with no error, but has not successfully received the duplicate 1722 packet (dup_id: 0) and the duplicate 1722 packet (dup_id: 2) due to an error. In this case, since only one duplicate 1722 packet (dup_id: 1) has been successfully received although dup_num = 2 is set, the ECU 24-2 can recognize that the two duplicate 1722 packets (dup_id: 0) and the duplicate 1722 packet (dup_id: 2) have not been successfully received. Therefore, the ECU 24-2 needs to perform processing of duplicating the duplicate 1722 packet (dup_id: 1) twice and transmitting a total of three duplicate 1722 packets.

At this time, the ECU 24-2 changes the dup_id of the successfully received duplicate 1722 packet (dup_id: 1) from 1 to 0 (the smallest value), sets Err to 0 (that is, there is no error), and transfers the first duplicate 1722 packet (dup_id: 0, Err: 0) to the ECU 24-3. Alternatively, the ECU 24-2 duplicates the successfully received duplicate 1722 packet (dup_id: 1) twice, sets 1 (next larger value) to dup_id and sets 1 to Err of the second duplicate 1722 packet, and sets 2 (next larger value) to dup_id and sets 1 to Err of the third duplicate 1722 packet. Then, the ECU 24-2 transfers the duplicate 1722 packet (dup_id: 1, Err: 1) and the duplicate 1722 packet (dup_id: 2, Err: 1) to the ECU 24-3.

As described above, if at least one of the three duplicate 1722 packets can be successfully received, the communication system 11 can transmit the duplicate 1722 packets from the ECU 22 to the destination ECU 24 with higher reliability.

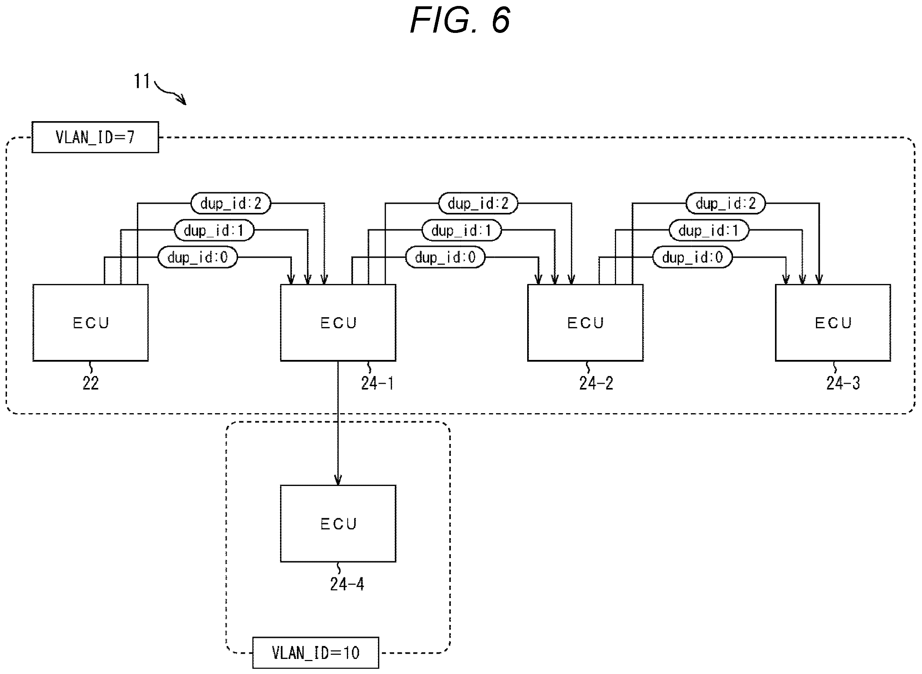

Fig. 6 is a diagram for describing an example of processing of controlling whether or not to duplicate the 1722 packet on the basis of a virtual local area network (VLAN) which is an Ethernet standard. Here, an example where three 1722 packets transmitted from the ECU 22 are relayed by the ECU 24-1 and the ECU 24-2 and transmitted to the destination ECU 24-3, and relayed by the ECU 24-1 and transmitted to the destination ECU 24-4 will be described. Furthermore, similarly to the packet transfer processing described with reference to Fig. 5, dup_num = 2 is set.

In the example illustrated in Fig. 6, the ECU 22 and the ECUs 24-1 to 24-3 are classified into a virtual LAN with VLAN_ID set to 7, and the virtual LAN (VLAN_ID = 7) is configured to duplicate the 1722 packet and transmit the duplicate 1722 packets. Furthermore, the ECU 24-4 is classified into a virtual LAN with VLAN_ID set to 10, and the virtual LAN (VLAN_ID = 10) is configured to transmit the 1722 packet without duplication.

First, the ECU 22 duplicates the same 1722 packet twice, and transmits a duplicate 1722 packet (dup_id: 0), a duplicate 1722 packet (dup_id: 1), and a duplicate 1722 packet (dup_id: 2) to the ECU 24-1. Then, the ECU 24-1 transfers the duplicate 1722 packet (dup_id: 0), the duplicate 1722 packet (dup_id: 1), and the duplicate 1722 packet (dup_id: 2) to the ECU 24-2, and transfers one 1722 packet to the ECU 24-4. Furthermore, the ECU 24-2 transfers the duplicate 1722 packet (dup_id: 0), the duplicate 1722 packet (dup_id: 1), and the duplicate 1722 packet (dup_id: 2) to the ECU 24-3.

As described above, the combination of the 1722 packet duplication and the VLAN allows the communication system 11 to improve error tolerance and flexibly set a wider area path. It is therefore possible for the communication system 11 to make an adjustment to achieve an optimal balance between, for example, the transfer rate for each VLAN and ensuring error tolerance.

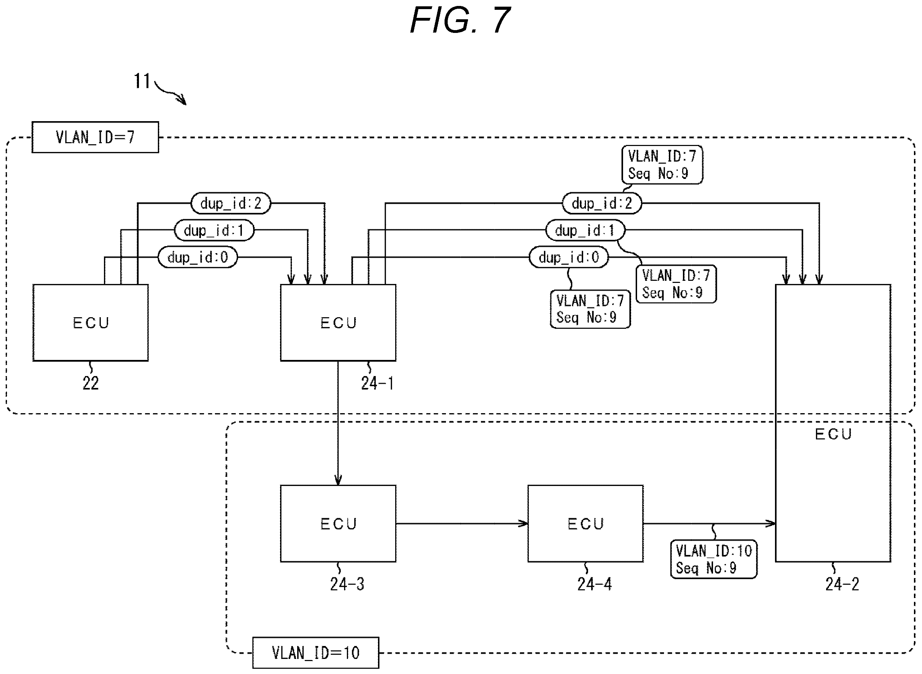

Fig. 7 is a diagram for describing an example of processing of controlling whether or not to duplicate the 1722 packet on the basis of a VLAN in a case where IEEE 802.1CB is applied to the ECU 24-1 and the ECU 24-2. Here, an example where three 1722 packets transmitted from the ECU 22 are relayed by the ECU 24-1 and transmitted to the destination ECU 24-2, and relayed by the ECU 24-1, the ECU 24-3, and the ECU 24-4 and transmitted to the destination ECU 24-2 will be described. Similarly to the packet transfer processing described with reference to Fig. 5, dup_num = 2 is set.

In the example illustrated in Fig. 7, the ECU 22, the ECU 24-1, and the ECU 24-2 are classified into a virtual LAN with VLAN_ID set to 7, and the virtual LAN (VLAN_ID = 7) is configured to duplicate the 1722 packet and transmit the duplicate 1722 packets. Furthermore, the ECUs 24-2 to 24-4 are classified into a virtual LAN with VLAN_ID set to 10, and the virtual LAN (VLAN_ID = 10) is configured to transmit the 1722 packet without duplication. As described above, the ECU 24-2 can be classified into both the virtual LAN (VLAN_ID = 7) and the virtual LAN (VLAN_ID = 10).

The ECU 24-1 can transmit the 1722 packet through two paths of the virtual LAN (VLAN_ID = 7) and the virtual LAN (VLAN_ID = 10) using the Duplicate functionality of IEEE 802.1CB. Then, in the example illustrated in Fig. 7, the 1722 packet duplication is applied only to the path of the virtual LAN (VLAN_ID = 7).

Since the ECU 24-3 and the ECU 24-4 are on the path of the virtual LAN (VLAN_ID = 10), they merely transmit one 1722 packet without duplication.

The use of the Duplicate functionality of the IEEE 802.1CB allows the ECU 24-2 to acquire only the 1722 packet that has been successfully received first through either of the two paths of the virtual LAN (VLAN_ID = 7) and the virtual LAN (VLAN_ID = 10) and discard the subsequent 1722 packets.

Here, how to set Sequential Number (sequential number) in a case where IEEE 802.1CB is applied will be described.

For example, as illustrated in Fig. 7, in a case where the ECU 24-1 increments Sequential Number when duplicating the 1722 packet with Sequential Number set to 9 (dup_id: 0, Seq No: 9), duplicate 1722 packet (dup_id: 1, Seq No: 10) and 1722 packet (dup_id: 2, Seq No: 11) are created. However, in this case, when the ECU 24-2 receives the 1722 packets, the Sequential Number of the 1722 packet (dup_id: 0, Seq No: 9) passing through the virtual LAN (VLAN_ID = 10) does not match the Sequential Numbers of the other 1722 packets, causing the packets to lose their consistency.

Therefore, in the communication system 11, when the 1722 packet is duplicated, the Sequential Number of the duplicate 1722 packet is set to match the Sequential Number of the original 1722 packet. With this configuration, for example, the ECU 24-1 duplicates the 1722 packet (dup_id: 0, Seq No: 9) without incrementing the Sequential Number to create the 1722 packet (dup_id: 1, Seq No: 9) and the 1722 packet (dup_id: 2, Seq No: 9). Therefore, when the ECU 24-2 receives the 1722 packets, the Sequential Number of the 1722 packet (dup_id: 0, Seq No: 9) passing through the virtual LAN (VLAN_ID = 10) matches the Sequential Numbers of the other 1722 packets.

### <Processing example of communication processing>

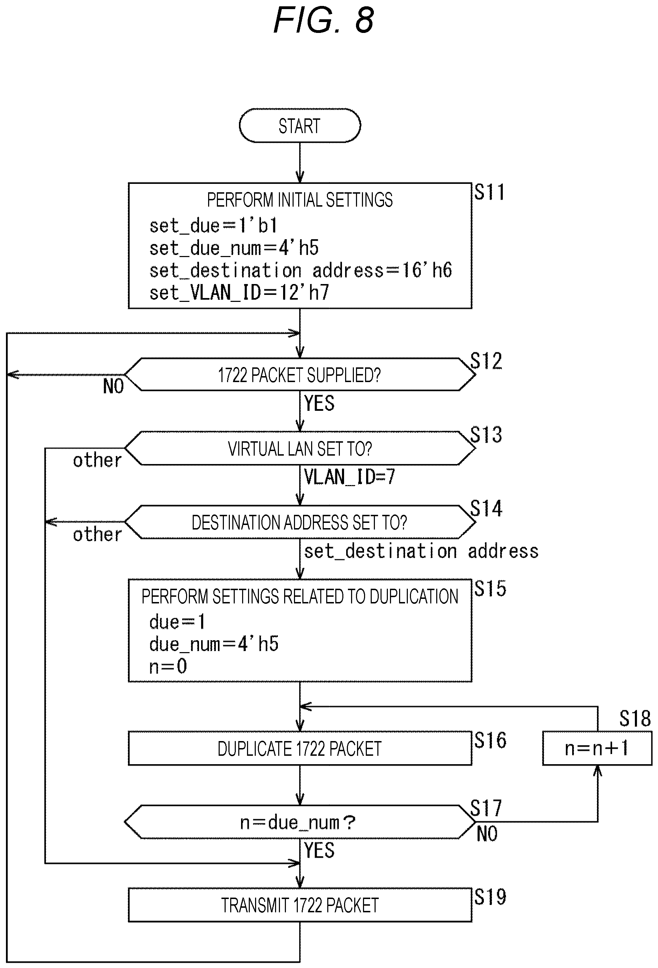

A processing example of communication processing performed by the communication system 11 will be described with reference to Figs. 8 to 10.

Fig. 8 is a flowchart for describing the packet duplication processing performed by the packet duplication unit 82.

For example, the processing is initiated upon the start of the ECU 22, and in step S11, the packet duplication unit 82 performs initial settings (for example, set_due = 1'b1, set_due_num = 4'h5, set_destination address = 16'h6, set_VLAN_ID = 12'h7) for the 1722 packet duplication.

In step S12, the packet duplication unit 82 determines whether or not the 1722 packet has been supplied from the 1722 packet generation unit 81, and the processing waits until it is determined that the 1722 packet has been supplied. For example, when the packet (A-Packet) is supplied from the receiver circuit 42 to the 1722 packet generation unit 81 via the bus 49 and the 1722 packet generation unit 81 generates and supplies the 1722 packet to the packet duplication unit 82, the packet duplication unit 82 determines that the 1722 packet has been supplied, and the processing proceeds to step S13.

In step S13, the packet duplication unit 82 determines whether or not the virtual LAN into which the ECU 22 is classified is configured to duplicate the 1722 packet and transmit duplicate 1722 packets on the basis of the VLAN_ID set in the initial settings in step S11. For example, as described with reference to Figs. 6 and 7, in a case where the virtual LAN (VLAN_ID = 7) is configured to duplicate the 1722 packet and transmit duplicate 1722 packets, the packet duplication unit 82 determines whether or not the virtual LAN is configured to duplicate the 1722 packet and transmit duplicate 1722 packets on the basis of whether or not VLAN_ID = 7.

In step S13, in a case where the packet duplication unit 82 determines that the virtual LAN is configured to duplicate the 1722 packet and transmit duplicate 1722 packets (VLAN_ID = 7), the processing proceeds to step S14.

In step S14, the packet duplication unit 82 determines whether or not the destination address of the 1722 packet supplied from the 1722 packet generation unit 81 is set _destination address set in the initial settings in step S11, and in a case where it is determined that the destination address is set_destination address, the processing proceeds to step S15.

In step S15, the packet duplication unit 82 performs settings related to the 1722 packet duplication (for example, due = 1, due_num = 4'h5, n = 0) on the basis of the initial settings in step S11.

In step S16, the packet duplication unit 82 duplicates the 1722 packet supplied from the 1722 packet generation unit 81.

In step S17, the packet duplication unit 82 determines whether or not a duplication count n has reached the number of duplicates due_num.

In step S17, in a case where the packet duplication unit 82 determines that the duplication count n has not reached the number of duplicates due_num, the processing proceeds to step S18, and the duplication count n is incremented by one. Thereafter, the processing returns to step S16, and similar processing is repeated subsequently.

On the other hand, in step S17, in a case where the packet duplication unit 82 determines that the duplication count n has reached the number of duplicates due_num, the processing proceeds to 19.

In step S19, the packet duplication unit 82 supplies the 1722 packets to the transmitting physical layer 73 to cause the transmitting physical layer 73 to transmit the 1722 packets. For example, in a case where it is determined in step S13 that the virtual LAN is configured to duplicate the 1722 packet and transmit duplicate 1722 packets (VLAN_ID = 7), and it is determined in step S14 that the destination address of the 1722 packet is set _destination address, the predetermined number (due_num + 1) of duplicate 1722 packets are transmitted from the transmitting physical layer 73 in step S19.

On the other hand, in a case where it is determined in step S13 that the virtual LAN is not configured to duplicate the 1722 packet and transmit duplicate 1722 packets (set to other than VLAN_ID = 7), or in a case where it is determined in step S14 that the destination address is not set _destination address, steps S15 to S18 are skipped, and the processing proceeds to step S19. Therefore, in this case, in step S19, the packet duplication unit 82 supplies the 1722 packet to the transmitting physical layer 73 without duplication, and the transmitting physical layer 73 transmits only one 1722 packet.

Then, after step S19, the processing returns to step S12, and similar processing is repeated subsequently for the next 1722 packet.

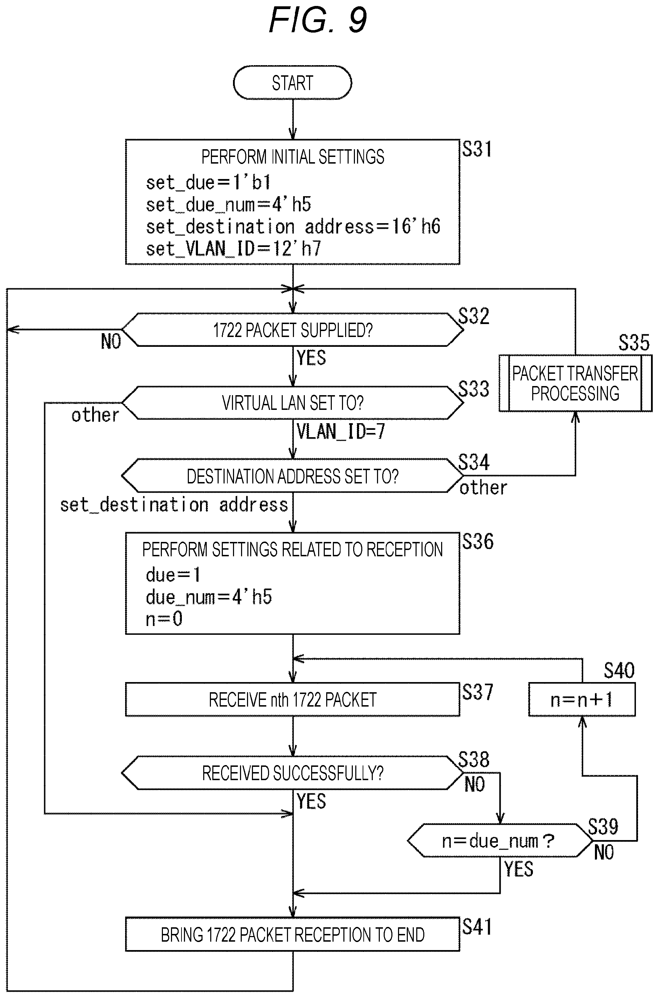

Fig. 9 is a flowchart for describing the duplicate packet management processing performed by the duplicate packet management unit 87.

For example, the processing is initiated upon the start of the ECU 22, and in step S31, the duplicate packet management unit 87 performs initial settings (for example, set_due = 1'b1, set_due_num = 4'h5, set_destination address = 16'h6, set_VLAN_ID = 12'h7) for the management of 1722 packet duplication.

In step S32, the duplicate packet management unit 87 determines whether or not the 1722 packet has been supplied from the receiving physical layer 74, and the processing waits until it is determined that the 1722 packet has been supplied. For example, when the receiving physical layer 74 receives the 1722 packet transmitted via the network 23 and supplies the packet to the duplicate packet management unit 87, the duplicate packet management unit 87 determines that the 1722 packet has been supplied, and the processing proceeds to step S33.

In step S33, the duplicate packet management unit 87 determines whether or not the virtual LAN into which the ECU 22 is classified is configured to duplicate the 1722 packet and transmit duplicate 1722 packets on the basis of the VLAN_ID set in the initial settings in step S31. For example, as described with reference to Figs. 6 and 7, in a case where the virtual LAN (VLAN_ID = 7) is configured to duplicate the 1722 packet and transmit duplicate 1722 packets, the packet duplication unit 82 determines whether or not the virtual LAN is configured to duplicate the 1722 packet and transmit duplicate 1722 packets on the basis of whether or not VLAN_ID = 7.

In step S33, in a case where the duplicate packet management unit 87 determines that the virtual LAN is configured to duplicate the 1722 packet and transmit duplicate 1722 packets (VLAN_ID = 7), the processing proceeds to step S34.

In step S34, the duplicate packet management unit 87 determines whether or not the destination address of the 1722 packet supplied from the receiving physical layer 74 is set _destination address set in the initial settings in step S31.

In step S34, in a case where the duplicate packet management unit 87 determines that the destination address of the 1722 packet is other than set_destination address, the processing proceeds to step S35. That is, in this case, since the destination of the 1722 packet is other than the ECU 22, it is necessary to transfer the 1722 packet to the destination.

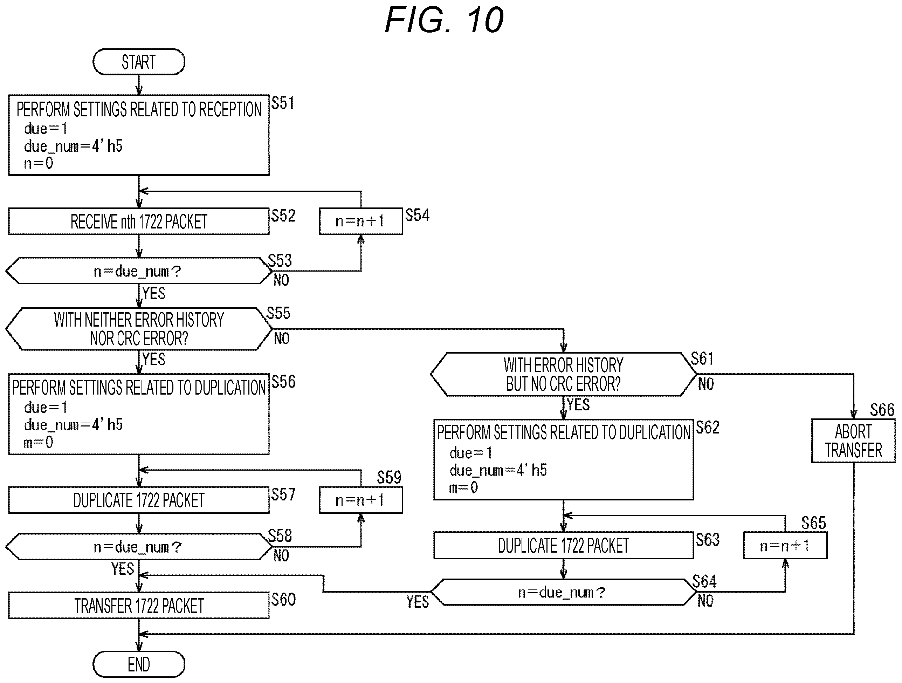

In step S35, the duplicate packet management unit 87 performs the packet transfer processing of transferring the 1722 packet (see Fig. 10). Thereafter, the processing returns to step S32, and similar processing is repeated subsequently.

On the other hand, in step S34, in a case where the duplicate packet management unit 87 determines that the destination address of the 1722 packet is set _destination address, that is, in a case where the destination of the 1722 packet is the ECU 22, the processing proceeds to step S36.

In step S36, the duplicate packet management unit 87 performs settings related to the duplicate 1722 packet reception (for example, due = 1, due_num = 4'h5, n = 0).

In step S37, the duplicate packet management unit 87 receives the nth duplicate 1722 packet.

In step S38, the duplicate packet management unit 87 determines whether or not the duplicate 1722 packet has been successfully received with no error in step S37.

In step S38, in a case where the duplicate packet management unit 87 determines that the duplicate 1722 packet has not been successfully received, that is, in a case where there is an error in the duplicate 1722 packet, the processing proceeds to step S39.

In step S39, the duplicate packet management unit 87 determines whether or not a reception count n has reached the number of duplicates due_num.

In step S39, in a case where the packet duplication unit 82 determines that the reception count n has not reached the number of duplicates due_num, the processing proceeds to step S40, and the duplication count n is incremented by one. Thereafter, the processing returns to step S37, and similar processing is repeated subsequently for the next duplicate 1722 packet.

On the other hand, in step S38, in a case where the duplicate packet management unit 87 determines that the duplicate 1722 packet has been successfully received, the processing proceeds to step S41, and the duplicate 1722 packet reception is brought to an end. That is, in this case, only the duplicate 1722 packet that has been successfully received first is acquired, and the subsequent duplicate 1722 packets are discarded.

On the other hand, in step S39, in a case where the packet duplication unit 82 determines that the reception count n has reached the number of duplicates due_num, the processing proceeds to step S41, and the duplicate 1722 packet reception is brought into an end. That is, in this case, even if the predetermined number of duplicate 1722 packets (due_num + 1) have been received, it is considered that no duplicate 1722 packet has been successfully received.

On the other hand, in step S33, in a case where the duplicate packet management unit 87 determines that the virtual LAN is not configured to duplicate the 1722 packet and transmit duplicate 1722 packets (set to other than VLAN_ID = 7), the processing proceeds to step S41 and the 1722 packet reception is brought to an end. That is, in this case, the 1722 packet is not duplicated, and only one 1722 packet is acquired.

Then, after step S41, the processing returns to step S32, and similar processing is repeated subsequently for the next 1722 packet.

Note that, similarly to the network communication processing unit 43 of the ECU 22, the network communication processing unit 51 of the ECU 24 also includes the duplicate packet management unit 87, and the duplicate packet management processing as described with reference to Fig. 9 is also performed in the ECU 24. Furthermore, the same applies to the packet transfer processing to be described with reference to Fig. 10.

Fig. 10 is a flowchart for describing the packet transfer processing performed in step S35 in Fig. 9.

In step S51, the duplicate packet management unit 87 performs settings related to the duplicate 1722 packet reception (for example, due = 1, due_num = 4'h5, n = 0).

In step S52, the duplicate packet management unit 87 receives the nth duplicate 1722 packet.

In step S53, the duplicate packet management unit 87 determines whether or not the reception count n has reached the number of duplicates due_num.

In step S53, in a case where the duplicate packet management unit 87 determines that the reception count n has not reached the number of duplicates due_num, the processing proceeds to step S54, and the duplication count n is incremented by one. Thereafter, the processing returns to step S52, and similar processing is repeated subsequently for the next duplicate 1722 packet.

On the other hand, in step S53, in a case where the duplicate packet management unit 87 determines that the reception count n has reached the number of duplicates due_num, the processing proceeds to step S55.

In step S55, the duplicate packet management unit 87 determines whether or not a condition where there are neither an error history nor a CRC error is satisfied for the predetermined number of duplicate 1722 packets received in step S52.

In step S55, in a case where the duplicate packet management unit 87 determines that the condition where there are neither an error history nor a CRC error is satisfied for the predetermined number of duplicate 1722 packets received in step S52, the processing proceeds to step S56.

In step S56, the packet duplication unit 82 performs settings related to the 1722 packet duplication (for example, due = 1, due_num = 4'h5, n = 0).

In step S57, the packet duplication unit 82 duplicates, as an original packet, the first duplicate 1722 packet among the predetermined number of duplicate 1722 packets received in step S52.

In step S58, the packet duplication unit 82 determines whether or not the duplication count n has reached the number of duplicates due_num.

In step S58, in a case where the packet duplication unit 82 determines that the duplication count n has not reached the number of duplicates due_num, the processing proceeds to step S59, and the duplication count n is incremented by one. Thereafter, the processing returns to step S57, and similar processing is repeated subsequently.

On the other hand, in step S58, in a case where the packet duplication unit 82 determines that the duplication count n has reached the number of duplicates due_num, the processing proceeds to 60.

In step S60, the packet duplication unit 82 supplies the predetermined number of duplicate 1722 packets (due_num + 1) to the transmitting physical layer 73 to cause the transmitting physical layer 73 to transmit the predetermined number of duplicate 1722 packets (due_num + 1).

On the other hand, in step S55, in a case where the duplicate packet management unit 87 determines that the condition where there are neither an error history nor a CRC error is satisfied for the predetermined number of duplicate 1722 packets received in step S52, the processing proceeds to step S61. That is, in this case, there is either an error history or a CRC error.

In step S61, the duplicate packet management unit 87 determines whether or not a condition where there is an error history but no CRC error is satisfied for the predetermined number of duplicate 1722 packets received in step S52.

In step S61, in a case where the duplicate packet management unit 87 determines that the condition where there is an error history but no CRC error is satisfied for the predetermined number of duplicate 1722 packets received in step S52, the processing proceeds to step S62.

Thereafter, in steps S62 to S64, processing similar to steps S56 to S58 is performed. At this time, in step S63, the packet duplication unit 82 duplicates, as an original packet, the first duplicate 1722 packet with an error history but no CRC error among the predetermined number of duplicate 1722 packets received in step S52, with the error history (Err: 1) set. Thereafter, the processing proceeds to step S60.

In step S61, in a case where the duplicate packet management unit 87 determines that the condition where there is an error history but no CRC error is not satisfied for the predetermined number of duplicate 1722 packets received in step S52, the processing proceeds to step S66. That is, in this case, there are both an error history and a CRC error, indicating that no duplicate 1722 packet has been successfully received.

In step S66, the packet duplication unit 82 aborts the duplicate 1722 packet transfer.

Then, after step S60 or step S66, the packet transfer processing is brought to an end.

As described above, in the communication system 11, the packet duplication processing, the duplicate packet management processing, and the packet transfer processing are performed, so that the predetermined number of duplicate 1722 packets can be transmitted, received, and transferred, allowing an improvement in noise resistance performance.

### <Usage example of communication system>

A usage example in which the communication system 11 in Fig. 1 is applied to a vehicle 12 will be described with reference to Fig. 11.

In a communication system 11A illustrated in Fig. 11, five CISs 21-1 to 21-5 are arranged in the vehicle 12, and are connected with the network 23, respectively, via ECUs 22-1 to 22-5. Furthermore, the ECU 24 is connected with the network 23.

The ECU 24 includes a network communication processing unit 51 and an image database 52, and the network communication processing unit 51 receives 1722 packets transmitted from the ECUs 22-1 to 22-5 via the network 23 to acquire image data, and stores the image data into the image database 52.

For example, the image data stored in the image database 52 is transmitted to a user device 26, and surrounding images of the vehicle 12 captured by the CISs 21-1 to 21-5 are displayed on the user device 26. Furthermore, the image data stored in the image database 52 is transmitted to a map database 25, and map data is created using the images (still images or moving images) captured by the CISs 21-1 to 21-5.

At this time, in the communication system 11A, the pieces of image data acquired at the same timing by the CISs 21-1 to 21-5 are timestamped by (the network communication processing units 43 of) the ECUs 22-1 to 22-5, respectively, and are transmitted to the network 23. For example, the respective pieces of image data may have different transmission times due to restrictions on wiring in the vehicle 12 or may be transmitted at different transmission timings due to variations in transmission time in the network 23. It is therefore anticipated that the ECU 24 may receive, at different timings, the pieces of image data acquired at the same timing.

Even in such a case, by referring to the timestamp added to each piece of image data, the communication system 11A can synchronize the pieces of image data acquired at the same timing in the ECU 24 without depending on the transmission timing. That is, in the image database 52 of the ECU 24, a database is constructed such that the pieces of image data acquired at the same timing by the five CISs 21-1 to 21-5 are synchronized, and images (still images or moving images) can be stored for a certain period of time.

Therefore, the user device 26 can display, in real-time, the pieces of image data acquired by the five CISs 21-1 to 21-5 and synchronized with each other. Furthermore, the map database 25 can create high-precision map data from the pieces of image data acquired by the five CISs 21-1 to 21-5 and synchronized with each other.

Then, the communication system 11A transmits and receives the predetermined number of duplicate 1722 packets as described above, allowing an improvement in noise resistance performance. This prevents 1722 packets from being corrupted on the path of the network 23, allowing the ECU 24 to reliably receive image data.

### <Configuration example of computer>

Next, the series of processing (communication method) described above can be performed by hardware or software. In a case where the series of processing is performed by software, a program constituting the software is installed on a general-purpose computer or the like.

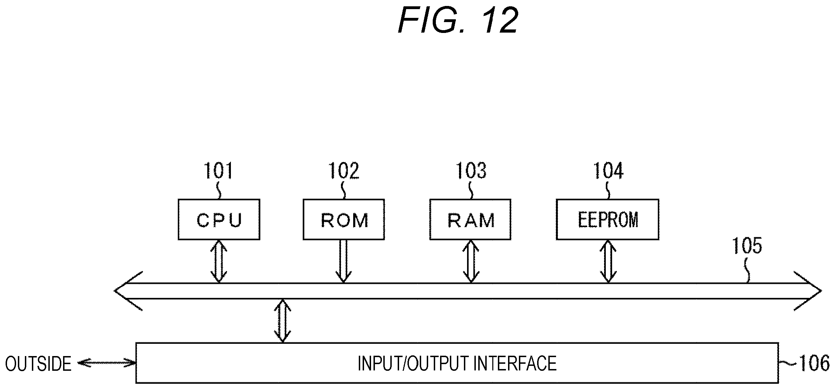

Fig. 12 is a block diagram illustrating a configuration example of an embodiment of a computer on which a program for performing the series of processing described above is installed.

In the computer, a central processing unit (CPU) 101, a read only memory (ROM) 102, a random access memory (RAM) 103, and an electronically erasable and programmable read only memory (EEPROM) 104 are interconnected via a bus 105. The bus 105 is further connected with an input/output interface 106, and the input/output interface 106 is connected to the outside.

In the computer configured as described above, the CPU 101 executes a program loaded from the ROM 102 and the EEPROM 104 into the RAM 103 through the bus 105 to perform the above-described series of processing. Furthermore, the program executed by the computer (CPU101) can be written in advance to the ROM 102, and can be installed or updated in the EEPROM 104 from the outside via the input/output interface 106.

Here, in the present specification, the processing to be performed by the computer in accordance with the program is not necessarily performed in the time series order described as the flowcharts. In other words, the processing to be performed by the computer in accordance with the program includes processing to be performed in parallel or independently (e.g., parallel processing or object-oriented processing).

Furthermore, the program may be executed by one computer (one processor) or executed in a distributed manner by a plurality of computers. Moreover, the program may be transferred to a distant computer to be executed.

Moreover, in the present description, a system means a set of a plurality of components (devices, modules (parts), and the like), and it does not matter whether or not all the components are in the same housing. Therefore, a plurality of devices housed in separate housings and connected to each other via a network and a single device in which a plurality of modules is housed in one housing are both systems.

Furthermore, for example, a configuration described as a single device (or processing unit) may be divided into and configured as a plurality of devices (or processing units). Conversely, the configurations described above as a plurality of devices (or processing units) may be collectively configured as a single device (or processing unit). Furthermore, it goes without saying that a configuration other than the above-described configurations may be added to the configuration of each device (or each processing unit). Moreover, when the configuration and operation as the entire system are substantially the same, a part of the configuration of a certain device (or processing unit) may be included in the configuration of another device (or another processing unit).

Furthermore, for example, the present technology can be configured as cloud computing in which a plurality of devices shares a single function and jointly performs processing over a network.

Furthermore, for example, the program described above can be executed by any device. In this case, the device is only required to have a necessary function (functional block or the like) and obtain necessary information.

Furthermore, for example, each step described in the flowcharts described above can be executed by a single device, or can be executed by a plurality of devices in a shared manner. Moreover, in a case where a single step includes a plurality of processes, the plurality of processes included in the single step can be performed by a single device or performed by a plurality of devices in a shared manner. In other words, the plurality of processes included in the single step can also be performed as a plurality of steps. Conversely, the processes described as a plurality of steps can also be collectively performed as a single step.

Note that, in the program to be executed by the computer, the processes in steps describing the program may be performed in the time series order described in the present specification, or may be performed in parallel, or independently at a necessary timing such as when a call is made. That is, as long as there is no contradiction, the process of each step may be performed in a different order from the above-described order. Moreover, the processes in the steps describing the program may be performed in parallel or in combination with processes of another program.

Note that, the plurality of present technologies that has been described in the present specification can each be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technology can be implemented together with another technology that is not described above.

### <Combination example of configurations>

Note that, the present technology can also have the following configurations.
(1) A communication device including:
   a packet duplication unit that duplicates, as an original packet, a packet generated with a packet structure incorporating a mobile industry processor interface (MIPI) standard into a frame defined by a communication standard over a network to create a predetermined number of duplicate packets; and
   a transmission unit that transmits the predetermined number of duplicate packets via the network.
(2) The communication device according to the above (1), further including:
   a reception unit that receives the duplicate packets transmitted via the network; and
   a duplicate packet management unit that manages reception of the predetermined number of duplicate packets.
(3) The communication device according to the above (2), in which
   in a case where a destination address of the received duplicate packets is different from an address of the communication device, the duplicate packet management unit transfers the received duplicate packets.
(4) The communication device according to the above (3), in which
   in a case where any one of the predetermined number of duplicate packets has not been successfully received due to an error, the packet duplication unit duplicates, as an original packet, the duplicate packet that has been successfully received to transfer the predetermined number of duplicate packets.
(5) The communication device according to the above (3), in which
   the packet duplication unit acquires only the duplicate packet that has been successfully received first, and duplicates the duplicate packet as an original packet to transfer the predetermined number of duplicate packets.
(6) The communication device according to the above (5), in which
   the packet duplication unit sets an identification number to identify the duplicate packet serving as an original packet to a smallest value, and sets the identification number in sequential ascending order to the predetermined number of duplicate packets duplicated from the duplicate packet.
(7) The communication device according to the above (3), in which
   the packet duplication unit performs the duplication in a case where a virtual local area network (LAN) that serves as a communication path into which the communication device is classified is configured to duplicate the packet, and does not perform the duplication in a case where the virtual LAN is not configured to duplicate the packet.
(8) The communication device according to the above (7), in which
   the packet duplication unit sets a sequential number identical to a sequential number of the packet serving as an original packet, the sequential number being set to the predetermined number of duplicate packets created through the duplication.
(9) The communication device according to any one of the above (1) to (8), in which
   information to set whether or not the duplication of the packet is enabled is stored in a packet header of the packet.
(10) The communication device according to any one of the above (1) to (9), in which
   an identification number to identify each of the duplicate packets is stored in a packet header of the packet.
(11) The communication device according to any one of the above (1) to (10), in which
   information to set a number of duplicates of the packet is stored in a packet header of the packet.
(12) The communication device according to any one of the above (1) to (11), in which
   information indicating an error history of each of the duplicate packets is stored in a packet header of the packet.
(13) The communication device according to any one of the above (1) to (12), in which
   the communication standard over the network includes Institute of Electrical and Electronics Engineers (IEEE) 1722.
(14) A communication method including:
   causing a communication device to duplicate, as an original packet, a packet generated with a packet structure incorporating a mobile industry processor interface (MIPI) standard into a frame defined by a communication standard over a network to create a predetermined number of duplicate packets; and
   causing the communication device to transmit the predetermined number of duplicate packets via the network.
(15) A program causing a computer of a communication device to execute communication processing, the communication processing including:
   duplicating, as an original packet, a packet generated with a packet structure incorporating a mobile industry processor interface (MIPI) standard into a frame defined by a communication standard over a network to create a predetermined number of duplicate packets; and
   transmitting the predetermined number of duplicate packets via the network.

Note that, the present embodiment is not limited to the embodiments described above, and various modifications can be made without departing from the gist of the present disclosure. Furthermore, the effects described in the present specification are merely examples and are not restrictive, and some other effects may be achieved.

### REFERENCE SIGNS LIST

- 11: Communication system
- 12: Vehicle
- 21: CIS
- 22: ECU
- 23: Network
- 24: ECU
- 25: Map database
- 26: User device
- 31: CSE processing unit
- 32: Transmitter circuit
- 33: Physical layer interface
- 41: Physical layer interface
- 42: Receiver circuit
- 43: Network communication processing unit
- 44: I2C or I3C master
- 45: CCI master
- 46: Register
- 47: Processor
- 48: RAM
- 49: Bus
- 51: Network communication processing unit
- 52: Image database
- 71: gPTP timer
- 72: Transmitting processing unit
- 73: Transmitting physical layer
- 74: Receiving physical layer
- 75: Receiving processing unit
- 81: 1722 packet generation unit
- 82: Packet duplication unit
- 83: EtherAVB control unit
- 84: EtherTSN control unit
- 85: EtherAVB control unit
- 86: EtherTSN control unit
- 87: Duplicate packet management unit
- 88: 1722 CSE packet extraction unit

## Claims

1. A communication device comprising:
a packet duplication unit that duplicates, as an original packet, a packet generated with a packet structure incorporating a mobile industry processor interface (MIPI) standard into a frame defined by a communication standard over a network to create a predetermined number of duplicate packets; and
a transmission unit that transmits the predetermined number of duplicate packets via the network.

2. The communication device according to claim 1, further comprising:
a reception unit that receives the duplicate packets transmitted via the network; and
a duplicate packet management unit that manages reception of the predetermined number of duplicate packets.

3. The communication device according to claim 2, wherein
in a case where a destination address of the received duplicate packets is different from an address of the communication device, the duplicate packet management unit transfers the received duplicate packets.

4. The communication device according to claim 3, wherein
in a case where any one of the predetermined number of duplicate packets has not been successfully received due to an error, the packet duplication unit duplicates, as an original packet, the duplicate packet that has been successfully received to transfer the predetermined number of duplicate packets.

5. The communication device according to claim 3, wherein
the packet duplication unit acquires only the duplicate packet that has been successfully received first, and duplicates the duplicate packet as an original packet to transfer the predetermined number of duplicate packets.

6. The communication device according to claim 5, wherein
the packet duplication unit sets an identification number to identify the duplicate packet serving as an original packet to a smallest value, and sets the identification number in sequential ascending order to the predetermined number of duplicate packets duplicated from the duplicate packet.

7. The communication device according to claim 3, wherein
the packet duplication unit performs the duplication in a case where a virtual local area network (LAN) that serves as a communication path into which the communication device is classified is configured to duplicate the packet, and does not perform the duplication in a case where the virtual LAN is not configured to duplicate the packet.

8. The communication device according to claim 7, wherein
the packet duplication unit sets a sequential number identical to a sequential number of the packet serving as an original packet, the sequential number being set to the predetermined number of duplicate packets created through the duplication.

9. The communication device according to claim 1, wherein
information to set whether or not the duplication of the packet is enabled is stored in a packet header of the packet.

10. The communication device according to claim 1, wherein
an identification number to identify each of the duplicate packets is stored in a packet header of the packet.

11. The communication device according to claim 1, wherein
information to set a number of duplicates of the packet is stored in a packet header of the packet.

12. The communication device according to claim 1, wherein
information indicating an error history of each of the duplicate packets is stored in a packet header of the packet.

13. The communication device according to claim 1, wherein
the communication standard over the network includes Institute of Electrical and Electronics Engineers (IEEE) 1722.

14. A communication method comprising:
causing a communication device to duplicate, as an original packet, a packet generated with a packet structure incorporating a mobile industry processor interface (MIPI) standard into a frame defined by a communication standard over a network to create a predetermined number of duplicate packets; and
causing the communication device to transmit the predetermined number of duplicate packets via the network.

15. A program causing a computer of a communication device to execute communication processing, the communication processing comprising:
duplicating, as an original packet, a packet generated with a packet structure incorporating a mobile industry processor interface (MIPI) standard into a frame defined by a communication standard over a network to create a predetermined number of duplicate packets; and
transmitting the predetermined number of duplicate packets via the network.
